# EUROPÄISCHE PATENTSCHRIFT

(11) **EP 3 532 741 B1**
(45) Veröffentlichungstag und Bekanntmachung des Hinweises auf die Patenterteilung: **14.07.2021**
(21) Anmeldenummer: 17787414.6
(22) Anmeldetag: 23.10.2017
(51) Int. Cl.: F16C 25/08, B62D 1/16, F16C 27/06, F16C 19/20, F16C 19/40, F16C 33/374, F16C 17/00, F16C 33/38, F16C 33/46, F16C 33/58

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 26.10.2016 DE 102016221078
(43) Veröffentlichungstag der Anmeldung: 04.09.2019
(73) Patentinhaber: thyssenkrupp Presta AG, 9492 Eschen (LI); thyssenkrupp AG, 45143 Essen (DE)
(72) Erfinder: SULSER, Hansjoerg, 9487 Gamprin (LI); GEIGER, Adrian Vincent, 9436 Balgach (CH); WESELY, Alexander, Fischers, IN 46037 (US); DOUCE, Audrey, 6800 Feldkirch (AT); HERRMANN, Moritz, 6800 Feldkirch (AT); ESAKK, Esther, 74523 Schwäbisch Hall (DE)
(74) Vertreter: thyssenkrupp Intellectual Property GmbH
(86) Internationale Anmeldenummer: PCT/EP2017/076984
(87) Internationale Veröffentlichungsnummer: WO 2018/077793

(56) Entgegenhaltungen:
- EP-A1- 2 781 778
- DE-A1-102004 055 222
- JP-A- 2006 322 556

## Beschreibung

### Stand der Technik

Die Erfindung betrifft eine Lenksäule für ein Kraftfahrzeug, mit einer Lenkwelle, die in einem Mantelrohr um ihre Längsachse drehbar in einem Lager gelagert ist, welches zumindest einen mit der Lenkwelle drehfest verbundenen Innenring und einen koaxial dazu drehfest an dem Mantelrohr angebrachten Außenring umfasst, und mindestens ein Reibelement, das in einem Reibkontakt zwischen Innenring und Außenring angeordnet ist.

Über das am fahrerseitigen, hinteren Ende angebrachte Lenkrad wird zur Lenkung eines Kraftfahrzeugs vom Fahrer ein Lenkmoment in die Lenkwelle eingebracht, deren Drehung um die Längsachse über ein Lenkgetriebe in einen Lenkeinschlag der lenkbaren Räder des Kraftfahrzeugs umgesetzt wird. In einem alternativen Steer-by-wire-Lenksystem wird die Rotation der Lenkwelle mittels Sensoren erfasst und in ein elektrisches Steuersignal zur Ansteuerung von elektrischen Lenkaktoren umgesetzt.

Die Lenkwelle ist in der mit dem Fahrzeugchassis verbundenen Lenksäule um die Längsachse drehbar in mindestens einem Lager im Mantelrohr gelagert, üblicherweise in zwei in Längsrichtung beabstandeten Radiallagern. Ein derartiges Lager umfasst einen Innenring, der als innerer Lagerring auf der Lenkwelle angebracht ist und mit dieser zusammen drehbar ist, und einem Außenring, der in einem Mantelrohr bezüglich Drehung um die Längsachse drehfest mit der Lenksäule verbunden ist und den Innenring drehbar aufnimmt. Zwischen dem Außenring und dem Innenring befindet sich ein umlaufender Lagerspalt.

Um eine konstant leichtgängige Drehung der Lenkwelle zu ermöglichen, werden Lager mit geringer Lagerreibung zwischen Innenring und Außenring eingesetzt, die als Gleitlager oder als Wälzlager ausgebildet sein können. Bei einem Gleitlager wird durch Auswahl geeigneter Lagermaterialien zwischen Innenring und Außenring ein Reibpaar mit niedriger Reibungskraft gebildet; Wälzlager haben durch die zwischen Innenring und Außenring abrollenden Wälzkörper grundsätzlich eine geringe Lagerreibung.

Es ist bekannt, dass ein als besonders angenehm empfundenes haptisches Lenkgefühl entsteht, welches einen hochwertigen Eindruck des Fahrzeugs erzeugt, wenn das Lenkrad sanft gleitend gegen ein spürbares Gegenmoment gedreht wird. Insbesondere bei hilfskraftunterstützten Lenkungen, bei denen die Reaktionskräfte der Räder ausgeglichen werden und für den Fahrer am Lenkrad nicht spürbar sind, ist es beispielsweise aus der EP 2 781 778 A1 bekannt, ein Wälzlager mit einem Reibelement zu versehen, welches zwischen dem Außenring und dem Innenring gleitend parallel zu den abrollenden Wälzkörpern angeordnet ist. Das Reibelement ist mit dem Außenring fest verbunden und gleitet reibend auf einer Umfangsfläche des Innenrings, wodurch ein Reibmoment auftritt, welches einer Lenkbewegung als Gegenmoment entgegenwirkt. Dadurch kann das Lenkgefühl verbessert werden. Eine ähnliche Erhöhung der Lagerreibung tritt auch bereits bei den aus der DE 42 29 199 A1 und DE 197 44 280 A1 bekannten Anordnungen eines am Außenring angebrachten Dichtrings auf, der in Reibkontakt am Innenring anliegt.

Nachteilig an den aus dem Stand der Technik bekannten Anordnungen ist, dass das als Gegenmoment wahrgenommene Reibmoment ausschließlich bestimmt wird durch die in dem einen Reibpaar zwischen dem Reibelement und einem Lagerring wirkende Reibungskraft. Entsprechend empfindlich reagiert das Gegenmoment bereits auf geringe Abweichungen oder Störungen der im Reibpaar wirksamen Reibungskraft. Dies reduziert die Langzeitstabilität und Zuverlässigkeit und bedingt einen hohen Produktionsaufwand für die Ausrichtung und Montage des Reibelements. Außerdem wird durch die feste Anbringung des Reibelements am Außenring die Flexibilität der Fertigung eingeschränkt.

Aus der DE 10 2004 055 222 A1 ist es nach dem Oberbegriff des Anspruchs 1 bekannt, in einem Wälzlager einer Lenksäule zwischen Innen- und Außenring abwälzbare Reibwälzkörper einzusetzen. Die Anpassung zur Erzeugung einer definierten Reibkraft ist dabei umständlich und aufwendig.

Angesichts der vorangehend erläuterten Problematik ist es eine Aufgabe der vorliegenden Erfindung, ein Lager für eine Lenksäule anzugeben, welches eine robustere und stabilere Erzeugung eines definierten Gegenmoments und eine flexiblere Gestaltung ermöglicht.

### Darstellung der Erfindung

Zur Lösung der vorgenannten Problematik wird erfindungsgemäß vorgeschlagen, dass das Lager ein in Umfangsrichtung schwimmend zwischen dem Innenring und dem Außenring gelagertes Zwischenelement aufweist, an dem das Reibelement angebracht ist.

In der erfindungsgemäß schwimmenden Anordnung ist das Zwischenelement relativ zum Innenring und relativ zum Außenring bezüglich einer Drehung um die Längsachse bewegbar in dem Lager aufgenommen. Dadurch kann bei einer Drehung des Innenrings im Außenring eine relative Bewegung in Umfangsrichtung sowohl zwischen dem Zwischenelement und dem Außenring als auch zwischen dem Zwischenelement und dem Innenring auftreten. Entsprechend stellt die Anbringung von mindestens einem Reibelement am Zwischenelement erweiterte Möglichkeiten zur Gestaltung der als Gegenkraft wirksamen Reibkraft zur Verfügung, indem ein erster Reibkontakt zwischen dem Zwischenelement und dem Innenring und alternativ oder zusätzlich ein damit hinsichtlich der Übertragung der Reibungskraft in Serie liegender zweiter Reibkontakt zwischen dem Zwischenelement und dem Außenring ausgebildet werden kann. Es ist beispielsweise möglich, die beiden genannten Reibkontakte als gleichartige oder identische Reibpaare auszugestalten, so dass bei einer möglichen Störung eines Reibkontakts der andere Reibkontakt die volle Funktion zur Erzeugung der Gegenkraft übernimmt. Dadurch kann ein redundantes, besonders zuverlässiges Betriebsverhalten realisiert werden.

Es ist ebenfalls möglich, dass die beiden genannten Reibpaare definiert mit unterschiedlichen effektiven Reibungskräften gestaltet werden, beispielsweise durch entsprechende aufeinander reibende Materialpaarungen. Dadurch, dass ein Reibkontakt eine höhere Reibungskraft aufweisen kann als der andere Reibkontakt mit niedrigerer Reibungskraft, erfolgt eine Relativbewegung in dem Reibkontakt mit der höheren Reibungskraft erst dann, wenn der im Normalfall bei einem niedrigeren Gegenmoment ansprechende Reibkontakt in seiner Funktion gestört ist, beispielsweise blockiert. Dadurch kann die Funktion abgesichert werden.

Mindestens ein Reibelement kann an dem Zwischenelement angebracht sein, so dass es relativ zum Innenring und Außenring schwimmend gelagert ist und zusammen mit dem Zwischenelement relativ zum Innenring und zum Außenring in Umfangsrichtung bewegbar ist. Das Reibelement kann einen unmittelbaren oder mittelbaren Reibkontakt mit dem Innenring, oder mit dem Außenring, oder mit dem Innenring und dem Außenring aufweisen. Die gezielte Abstimmung des Gleitverhaltens in dem jeweiligen Reibkontakten kann unabhängig voneinander erfolgen, beispielsweise indem dass das Reibpaar zwischen Reibelement und Außenring mit einer anderen Material- bzw. Oberflächenpaarung realisiert wird als das Reibpaar zwischen Reibelement und Innenring.

Für ein gegebenes Paar von Innenring und Außenring kann das Reibverhalten und damit das gewünschte Gegenmoment durch die Ausgestaltung des Zwischenelements bestimmt werden. Für eine Lageranordnung können unterschiedliche haptische Charakteristiken der Lenkung zur Erzeugung eines individuell an eine Kunden-Zielgruppe abgestimmten Lenkgefühls einfach durch Einsatz von Zwischenelementen mit entsprechenden Reibelementen realisiert werden, durch die unterschiedliche Reibungskräfte realisiert werden können.

Zusätzlich zur vorangehend erläuterten Anbringung eines Reibelements an dem Zwischenelement ist es denkbar und möglich, dass das erfindungsgemäße Zwischenelement Reibkontakt hat mit einem oder mehreren Reibelementen, welche an dem Innenring oder dem Außenring angebracht sind, oder am Innenring und am Außenring, oder auch an einem weiteren schwimmend gelagerten Zwischenelement. Dadurch ist es ebenfalls möglich, die Reibpaare zwischen Zwischenelement und Innen- und Außenring unabhängig voneinander vorzugeben. Dadurch kann für eine gegebene Bauform eines Zwischenelements eine unterschiedliche Reibungscharakteristik realisiert werden.

Ein Reibelement besteht zumindest im Bereich seiner im Reibkontakt stehenden Kontakt- bzw. Reibflächen aus einem Material, welches weicher ist als die Materialien, aus dem der Innenring und der Außenring zumindest im Bereich ihrer mit dem Reibelement in Reibkontakt stehenden Kontaktflächen ausgebildet sind. Üblicherweise können Innen- und Außenring aus einem metallischen Werkstoff bestehen, beispielsweise aus Stahl, und ein Reibelement aus einem Kunststoff oder Elastomermaterial. Dadurch kann ein definiertes Reibverhalten vorgegeben werden, und es wird ein geringer Verschleiß im Reibkontakt sichergestellt.

Es kann vorgesehen sein, dass das Reibelement mit einer vorgegebenen Vorspannkraft gegen den Reibkontakt angedrückt wird. Die Vorspannkraft wird in Normalenrichtung auf die im Reibkontakt gegeneinander anliegenden Reib- bzw. Kontaktflächen ausgeübt und bestimmt die in Umfangsrichtung wirksame Reibungskraft. Die Erzeugung der Vorspannkraft kann dadurch erfolgen, dass das Reibelement in sich elastisch ausgebildet ist, beispielsweise aus elastisch verformbarem Kunststoff, und zwischen Innen- und Außenring und/oder Zwischenelement unter elastischer Deformation eingespannt ist. Alternativ kann ein Spannelement vorgesehen sein, beispielsweise ein Federelement, welches sich am Zwischenelement oder am Innen- oder Außenring abstützt und das Reibelement in Normalenrichtung gegen den Reibkontakt andrückt. Durch eine definierte Vorspannkraft kann die als Gegenkraft wirkende Reibungskraft konstant vorgegeben werden, wodurch ein konstantes Gegenmoment bei einer Drehung der Lenkwelle erzeugt wird.

Erfindungsgemäß kann ein einziges Zwischenelement zwischen Innen- und Außenring angeordnet sein. Alternativ können auch zwei oder mehr Zwischenelemente in Reihe zwischen Innen- und Außenring angeordnet sein. Das bedeutet, dass ein Zwischenelement zumindest einseitig ein weiteres Zwischenelement kontaktiert, wobei dann an zumindest einem Zwischenelement ein Reibelement angebracht sein kann, oder es zumindest mit einem Reibelement an einem anderen Zwischenelement oder am Innenring oder Außenring in Reibkontakt steht. Durch eine höhere Anzahl von Zwischenelementen wird die Anzahl der zwischen Innen- und Außenring wirksamen Reibpaare erhöht, so dass ein vorgegebenes Gegenmoment mit hoher Betriebssicherheit langzeitstabil eingehalten werden kann.

Das Reibelement kann den Innenring und/oder den Außenring und/oder ein Zwischenelement kontaktieren. Das Reibelement kann derart an dem Zwischenelement angebracht sein, dass es im Reibkontakt gleitend an dem Innenring anliegt, oder an dem Außenring, oder an dem Innenring und dem Außenring. Es kann auch im Reibkontakt gleitend an einem weiteren Zwischenelement anliegen, welches in Reihe mit dem ersten Zwischenelement zwischen Innen- und Außenring angeordnet ist. In jedem der dazwischen gebildeten Reibkontakte werden zwischen den gegeneinander anliegenden Kontaktflächen Reibpaare gebildet, zwischen denen Grenzflächenreibung auftreten kann. Alternativ kann bei der Verformung durch den Reibkontakt innere Reibung im Reibelement auftreten.

Es kann vorgesehen sein, dass das Reibelement koaxial zur Längsachse zwischen Innenring und Außenring angeordnet ist und bevorzugt ringförmig oder ringsegmentförmig ausgebildet ist. In dieser Bauform kann das Reibelement nicht erfindungsmäßig selbst das Zwischenelement bilden, welches im Reibspalt zwischen Innen- und Außenring angeordnet ist. Das Reibelement kann beispielsweise als ein zur Längsachse koaxial angeordneter Gleitring ausgebildet sein, der mit einer Umfangsfläche in einem ersten Reib- bzw. Gleitkontakt mit dem Innenring steht, und in einem zweiten Reib- bzw. Gleitkontakt mit dem Außenring. Anstelle eines geschlossenen Rings kann das Reibelement auch ein oder mehrere über den Umfang verteilte Winkelabschnitte oder Ringsegmente aufweisen. Es können auch mehrere Reibelemente in Reihe zwischen Innen- und Außenring angeordnet sein, wobei eines der Reibelemente jeweils mit mindestens einem weiteren Reibelement in Gleitkontakt steht, beispielsweise in Form von koaxial angeordneten Gleitringen.

Das Lager kann als Wälzlager ausgebildet sein mit zwischen dem Innenring und dem Außenring angeordneten Wälzkörpern. Das Wälzlager kann beispielsweise als Kugellager ausgebildet sein, bei dem Wälzkörper in Form von Kugeln bei einer relativen Drehung in Umfangsrichtung zwischen Innen- und Außenring abrollen. Für einen definierten Wälzkörperumlauf können nutförmig umlaufende Laufbahnen in den einander im Lagerspalt gegenüberliegenden Umfangsflächen von Innen- und Außenring ausgebildet sein, zwischen denen die Wälzkörper aufgenommen sind.

Wie an sich von Wälzlagern bekannt, können die Wälzkörper in einem Käfig drehbar aufgenommen sein. Der Käfig liegt zwischen Innen- und Außenring und hält die Wälzkörper in Umfangsrichtung auf gleichbleibendem Abstand. Gemäß der Erfindung kann der Käfig eine weitere Funktion als Zwischenelement haben, an dem ein oder mehrere Reibelemente angebracht sind, die in Reibkontakt mit dem Innen- und/oder Außenring stehen. Der Käfig kann auch selbst das Reibelement bilden.

An dem Käfig kann mindestens ein Reibelement fest angebracht sein, welches mindestens eine Gleitfläche aufweist. Ein oder mehrere Reibelemente können jeweils bevorzugt im Umfangsbereich zwischen den Wälzkörpern angeordnet sein. Die Gleitfläche eines Reibelements befindet sich mindestens auf Höhe des am Innen- oder Außenring anliegenden Wälzkörperumfangs, oder steht leicht darüber vor, so dass beim Abrollen der Wälzkörper das Reibelement am Innen- und/oder Außenring reibend entlanggleitet. Ein Reibelement kann so dimensioniert und angeordnet sein, dass es am Innen- und Außenring anliegt, oder am Innen- oder Außenring.

Zur Ausbildung einer weiteren Ausführungsform der Erfindung ist es möglich, dass ein Reibelement im Bereich einer Wälzkörperlaufbahn in dem Innenring und/oder dem Außenring angeordnet ist und in den Wälzkörper-Umlaufquerschnitt vorsteht. Unter dem Wälzkörper-Umlaufquerschnitt wird der Radialquerschnitt des Raumbereichs verstanden, den die Wälzkörper beim Umlauf zwischen den Laufbahnen passieren, beispielsweise bei Kugeln ist dies der torusförmige Raum zwischen den Kugellaufbahnen, in dem die Kugeln in Umfangsrichtung entlangrollen. Dadurch, dass das oder die Reibelemente in den Umlaufquerschnitt vorstehen, werden die Reibelemente an der Kontaktfläche eines dagegen abrollenden Wälzkörpers lokal elastisch deformiert. Der Wälzkörper drückt sich in das relativ dazu weichere Reibelement. Beim Abrollen erfolgt eine umlaufende dynamische Deformierung des Reibelements, so dass im Material des Reibelements innere Reibung auftritt, welche dem Abrollen des Wälzkörpers als Gegenkraft in Umfangsrichtung entgegenwirkt. Mit anderen Worten bilden der oder die Wälzkörper Zwischenelemente im Sinne der Erfindung, die im Reibkontakt mit den Reibelementen zusammenwirken und ein Gegenmoment erzeugen, welches einer Drehung der Lenkwelle entgegengesetzt ist. Eine praktische Realisierung kann beispielsweise erfolgen, indem ein ringförmiges Reibelement, beispielsweise ein O-Ring mit runden Querschnitt oder eine Ring mit rechteckigem Querschnitt, beispielsweise aus Gummi, POM, NBR oder dergleichen, in einer Laufbahn für die Wälzkörper im Innen- und/oder Außenring angebracht wird. Zur Aufnahme des Rings kann bevorzugt eine in der Laufbahn umlaufende Nut vorgesehen sein, welche für eine sichere Positionierung sorgt. Ein Vorteil dieser Ausführung ist, dass durch das Material und die Abmessungen des ringförmigen Reibelements die Reibungskraft vorgegeben werden können, so dass durch einen einfachen Austausch die Reibungscharakteristik eingestellt werden kann.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung in einer schematischen perspektivischen Darstellung,
- Figur 2: eine Lenksäule in perspektivischer Darstellung,
- Figur 3: ein teilweiser Längsschnitt durch die Lenksäule gemäß Figur 2,
- Figur 4: ein Längsschnitt durch ein erfindungsgemäßes Lager der Lenksäule gemäß Figur 2 und 3,
- Figur 5: eine auseinander gezogene Darstellung des Lagers gemäß Figur 4,
- Figur 6: ein Längsschnitt durch ein Lager in einer zweiten Ausführungsform, der nicht Teil der Erfindung ist.
- Figur 7: eine auseinander gezogene Darstellung des Lagers gemäß Figur 6,
- Figur 8: ein Längsschnitt durch ein erfindungsgemäßes Lager in einer dritten Ausführungsform,
- Figur 9: eine auseinander gezogene Darstellung des Lagers gemäß Figur 8,
- Figur 10: eine auseinander gezogene Darstellung eines erfindungsgemäßen Lagers in einer vierten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

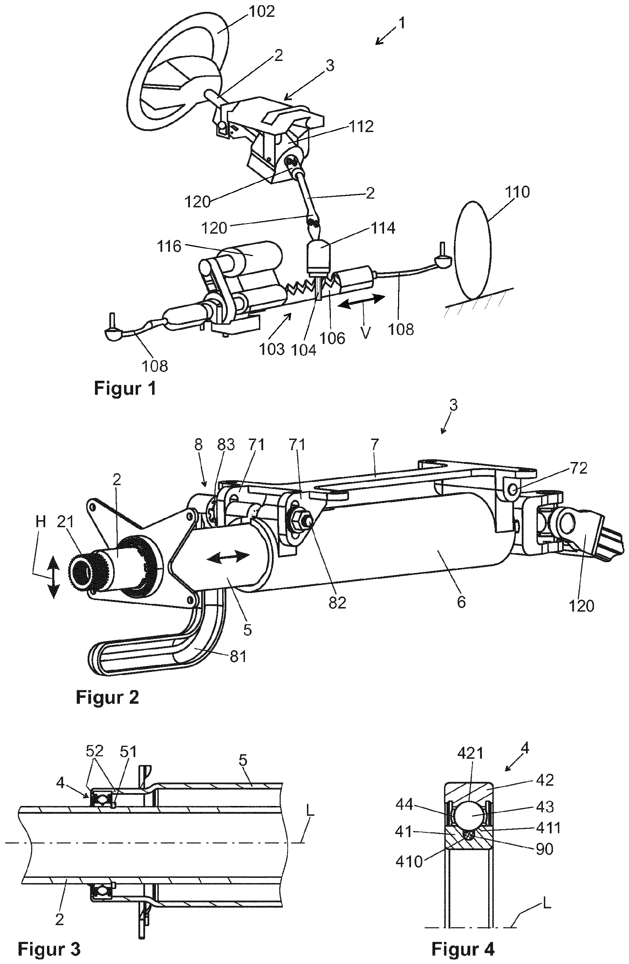

In Figur 1 ist eine Kraftfahrzeuglenkung 1 schematisch dargestellt, bei der ein Fahrer über ein Lenkrad 102 ein Lenk-Drehmoment (Lenkmoment) als Lenkbefehl in eine Lenkwelle 2 einbringen kann. In einem Lenkgetriebe 103 wird das Lenkmoment ist ein Lenkritzel 104 an der Lenkwelle 2 angebracht, welches mit einer Zahnstange 106 kämmt, die dann ihrerseits über eine Verschiebung V der Spurstangen 108 - wie mit dem Doppelpfeil angedeutet - den vorgegebenen Lenkwinkel auf die lenkbaren Räder 110 des Kraftfahrzeugs überträgt.

Zur Anpassung an die baulichen Gegebenheiten im Kraftfahrzeug und zum Ausgleich von Winkelversatz sind im Verlauf der Lenkwelle 2 Kreuzgelenke 120 eingesetzt.

Bei der dargestellten Kraftfahrzeuglenkung 1 kann eine elektrische Hilfskraftunterstützung in Form einer eingangsseitig mit der Lenkwelle 2 gekoppelten Hilfskraftunterstützung 112, einer mit dem Ritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 2 und/oder das Lenkritzel 104 und/oder eine Hilfskraft in Richtung der Verschiebung V in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Die Lenkwelle 2 weist an ihrem hinteren, eingangsseitigen Ende einen Befestigungsabschnitt 21 auf, an dem das hier nicht dargestellte Lenkrad 102 montierbar ist, und ist um ihre Längsachse L in einer Lenksäule 3 drehbar aufgenommen, die in Figur 2 einzeln dargestellt ist.

In einem Lager 4 ist die Lenkwelle 2 um die Längsachse L drehbar koaxial in einem Mantelrohr 5 gelagert.

Das Mantelrohr 5 ist koaxial in einer Manteleinheit 6 aufgenommen. An einer Konsoleneinheit 7, die an einer nicht dargestellten Fahrzeugkarosserie anbringbar ist, ist die Manteleinheit 6 zwischen zwei Seitenwangen 71 angeordnet, die sich quer zur Längsachse gegenüberliegen. Um eine Schwenkachse 72 ist die Manteleinheit 6 schwenkbar an der Konsoleneinheit gelagert.

Eine Spanneinrichtung 8 weist einen Betätigungshebel 81 auf, der drehfest mit einer Spannachse 82 verbunden ist und mit einem Spanngetriebe 83 zusammenwirkt. Die Spanneinrichtung 8 kann in Fixierstellung gebracht werden, indem durch manuelle Betätigung des Betätigungshebels 81 durch das Spanngetriebe 83 eine Spannkraft ausgeübt wird, welche die beiden Seitenwangen 71 gegeneinander zusammendrückt, dass die dazwischen befindliche Manteleinheit 6 relativ zur Konsoleneinheit 7 fixiert wird. Dabei wird ebenfalls die Manteleinheit 6 auf dem Mantelrohr 5 verspannt, so dass dieses in Richtung der Längsachse L in der Manteleinheit 6 fixiert ist. Dadurch ist die Position des am Befestigungsabschnitt 21 angebrachten Lenkrads 102 relativ zur Konsoleneinheit 7 und damit relativ zur Fahrerposition fixiert. Wird die Spanneinrichtung 8 durch entgegengesetzte Betätigung des Betätigungshebels 81 in Löseposition gebracht, werden die Seitenwangen 71 entlastet, so dass die Manteleinheit 6 um die Schwenkachse 72 verschwenkt und zwischen den Seitenwangen 71 zur Höhenverstellung in Höhenrichtung H auf oder ab bewegt werden kann, wie mit dem Doppelpfeil angedeutet. In dieser Lösestellung ist das Mantelrohr 5 zur Längsverstellung in der Manteleinheit 6 in Richtung der Längsachse L teleskopierend ein- oder ausfahrbar. Dadurch kann die Position des Lenkrads 102 relativ zur Fahrerposition eingestellt werden.

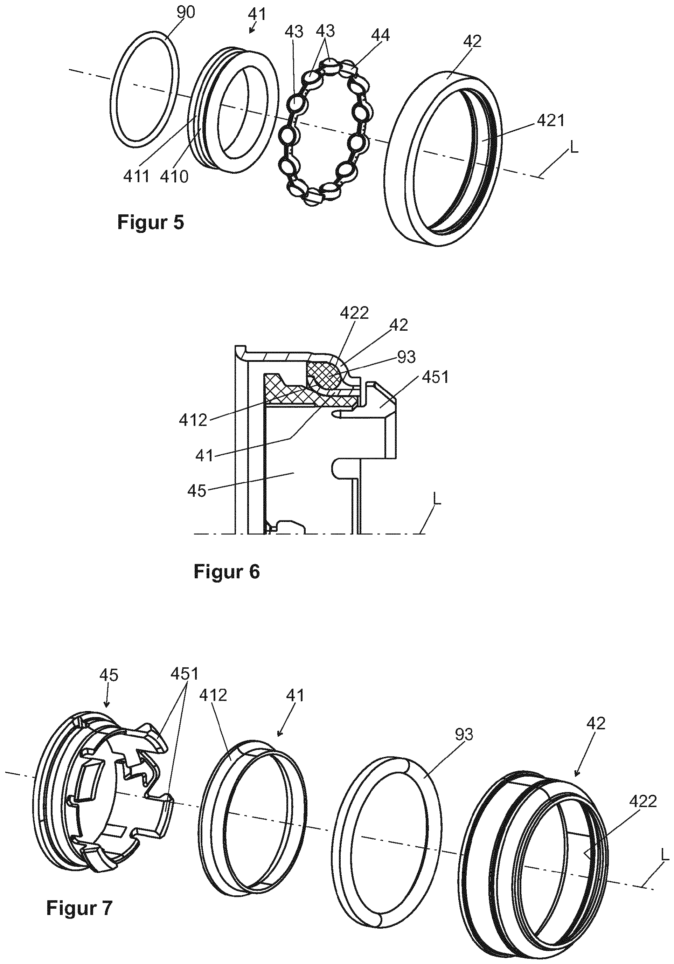

In Figur 3 ist ein Längsschnitt in vergrößerter Darstellung, wie die Lenkwelle 2 in dem Lager 4 um die Längsachse L drehbar in dem Mantelrohr 5 gelagert ist. Das Lager 4 ist mittels eines Sicherungsrings 51 in Richtung der Längsachse L an der Lenkwelle 2 abgestützt. Die Abstützung des Lagers 4 in dem Mantelrohr 5 erfolgt mittels einer in dem Mantelrohr ausgebildeten Schulter 52. Das Lager 4, welches in einer ersten Ausführungsform in Figur 4 in einem Längs-Teilschnitt vergrößert dargestellt ist, weist einen Innenring 41 auf, der drehfest auf der Lenkwelle 2 befestigt ist, und einen den Innenring 41 radial koaxial umgebenden Außenring 42, der drehfest in dem Mantelrohr 5 angebracht ist. Das Lager 4 ist in dieser ersten Ausführung als Wälzlager ausgebildet mit Wälzkörpern in Form von Kugeln 43, die zwischen Innenring 41 und Außenring 42 angeordnet sind. Wie in der auseinander gezogenen Darstellung von Figur 5 erkennbar, werden die Kugeln in einem Käfig 44 lose drehbar in festem Abstand zueinander in Umfangsrichtung gehalten.

Der Innenring 41 weist eine auf seinem Außenumfang nutförmig umlaufende Kugellaufbahn 411 auf, und der Außenring 41 weist eine auf seinem Außenumfang nutförmig umlaufende Kugellaufbahn 421 auf, so dass die Kugeln 43 sich bei einer relativen Drehung auf den Kugellaufbahnen 411 und 421 abwälzen. Beim Umlauf passieren die Kugeln 43 einen torusförmigen Kugel- bzw. Wälzkörper-Umlaufquerschnitt, der sich zwischen den Kugellaufbahnen 411 und 421 erstreckt und im Wesentlichen durch diese begrenzt wird.

In dem in Figur 4 gezeigten Beispiel weist die Kugellaufbahn 411 eine umlaufende Nut 410 auf, in die als erfindungsgemäßes Reibelement ein koaxial umlaufender O-Ring 90 eingelegt ist. Der O-Ring 90 besteht aus einem Elastomer (beispielsweise NBR) oder Gummimaterial und steht mit seinem Querschnitt in radialer Richtung aus der Nut 410 in den Kugel-Umlaufquerschnitt der Kugellaufbahn 411 vor. Dadurch drücken sich die aus einem harten Material wie Stahl oder Keramik bestehenden Kugeln 43 in radialer Richtung in den O-Ring 90 ein und verformen diesen lokal elastisch.

Gemäß der Erfindung bilden die Kugeln 43 in Umfangsrichtung bewegbar, im Sinne der Erfindung schwimmend, zwischen dem Innenring 41 und dem Außenring 42 angeordnete Zwischenelemente, die in Reibkontakt stehen mit dem O-Ring 90, welcher ein erfindungsgemäßes Reibelement bildet. Dadurch, dass die Kugeln 43 elastisch in den O-Ring 90 eingeformt werden, erfolgt beim Abrollen der Kugeln 43 bei einer relativen Drehung von Innenring 41 und Außenring 42 eine in Umfangsrichtung umlaufende dynamische Deformierung. Durch die innere Reibung im Material des O-Rings 90 wird die Rollreibung der Kugeln 43 auf der Kugellaufbahn 411 vergrößert, was sich als Reibungsmoment äußert, welches als Gegenmoment einer Drehung der Lenkwelle 2 entgegenwirkt.

Die Größe des Gegenmoments kann vorgegeben werden durch die Abmessungen und elastischen Eigenschaften des O-Rings 90, sowie der Oberflächen der Kugeln 43 und des O-Rings 90. Alternativ oder zusätzlich kann ein O-Ring 90 in der Kugellaufbahn 421 des Außenrings 42 angeordnet sein. Es können anstelle des O-Rings 90 mit kreisrundem Querschnitt auch solche mit rechteckigem oder anders geformtem Querschnitt eingesetzt werden.

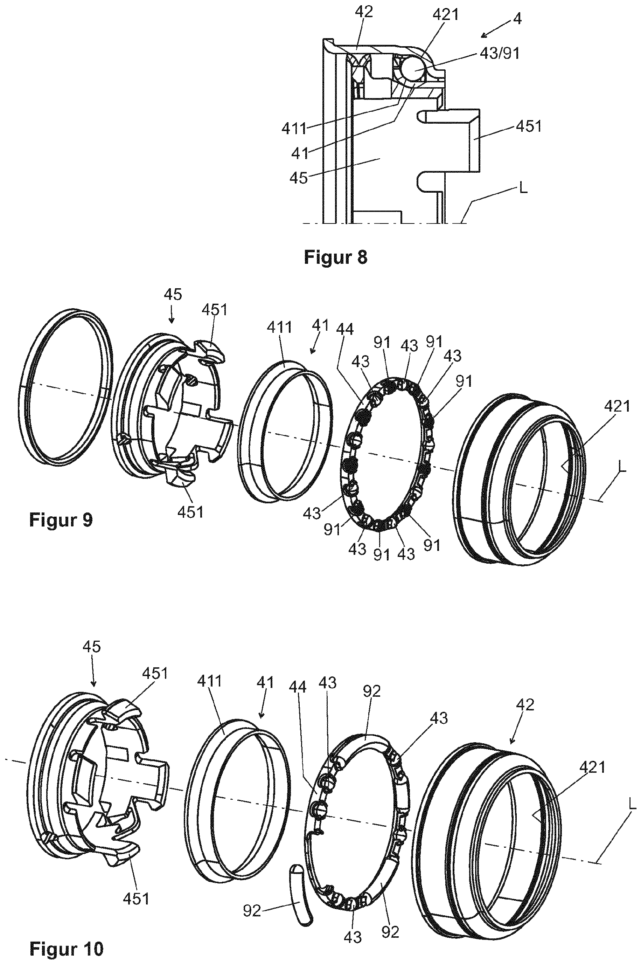

Figur 8 zeigt ein eine weitere Ausführung eines ebenfalls als Wälzlager ausgebildeten Lagers 4 in einem Längsschnitt, und Figur 9 eine in Richtung der Längsachse L axial auseinander gezogene Darstellung, wobei das Wälzlager der Figur 8 und 9 als Schrägkugellager ausgebildet ist.

Das Lager 4 gemäß Figuren 8 und 9 weist ebenfalls einen Innenring 41 mit einer Kugellaufbahn 411, einen Außenring 42 mit einer Kugellaufbahn 421 sowie einen radial dazwischen angeordneten Käfig 44 mit darin lose drehbar gehaltenen Kugeln 43 auf. Der Käfig 44 und die Kugeln 43 sind relativ zum Innenring 41 und Außenring 42 in Umfangsrichtung bewegbar un damit schwimmend im Sinne der Erfindung. Das Lager wird zusammengehalten durch einen Klemmring 45, der sich auf einer freien Stirnseite axial auf dem Innenring 41 abstützt, sich axial durch den Innenring 41, den Käfig 44 und des Außenring 42 hindurch erstreckt und mit widerhakenartigen Krallen 451 die freie Stirnseite des Außenrings 42, die dem Innenring 41 axial gegenüberliegt, umgreift. Dadurch werden die Kugeln 43 zwischen den hier gegen die Längsachse L geneigten Kugellaufbahnen 411 und 421 gehalten.

Der Klemmring 45 kann drehfest auf der Lenkwelle 2 angebracht sein und eine drehfeste Verbindung mit dem Innenring 41 herstellen. Die Krallen 451 können sich relativ zum Außenring 42 in Umfangsrichtung bewegen, so dass der Außenring 42 relativ zum Innenring 41 drehbar bleibt.

Eine Besonderheit der Ausführung gemäß Figur 9 ist, dass anstelle der harten Kugeln 43, die bevorzugt aus Stahl oder Keramik bestehen, eine oder mehrere Reibwälzelemente 91 in dem Käfig 44 angeordnet sind. Die Reibwälzelemente 91, die in der Zeichnung dunkel ausgefüllt dargestellt sind, sind wie die Kugeln 43 ebenfalls kugelförmig, und werden lose drehbar in dem Käfig 44 gehalten. Im Unterschied zu den Kugeln 43 bestehen die Reibwälzelemente 91 aus einem weicheren, elastischen Material, beispielsweise NBR, POM (siehe oben) oder Gummi. Die Reibwälzelemente 91 haben einen größeren Durchmesser als die Kugeln 43, der bevorzugt zwischen 1% und 20% größer ist, besonders bevorzugt zwischen 5% und 10%.

Die Kugeln 43 wälzen sich im Wesentlichen spielfrei, ausgenommen die vorhandene Lagerluft, auf den Laufbahnen 411 und 421 ab, wie dies bei Wälzlagern allgemein bekannt ist. Die Reibwälzelemente 91 bildenReibelemente, die im Reibkontakt zwischen den Laufbahnen 411 und 421 von Innenring 41 und Außenring 42 anliegen, wobei sie durch das Übermaß zu den Kugeln 43 zwischen den Laufbahnen 411 und 421 radial gequetscht bzw. gestaucht werden. Dadurch werden sie beim Abwälzen bei einer relativen Drehung von Innenring 41 und Außenring 42 gewalkt, wobei das elastische Material dynamisch deformiert wird. Aufgrund der inneren Reibung entsteht eine der Verformung entgegengesetzte Reibungskraft, die sich als Gegenkraft zwischen Innenring 41 und Außenring 42 äußert, welche ein einer Drehung der Lenkwelle 2 entgegengesetztes Gegenmoment bewirkt.

Durch die elastischen Eigenschaften, das Material, die Anzahl und die Abmessungen der Reibwälzelemente 91 kann die Gegenkraft bzw. das Gegenmoment vorgegeben werden, welches zwischen Innenring 41 und Außenring 42 und entsprechend einer Drehung der Lenkwelle 2 in dem Mantelrohr 5 entgegenwirkt.

Die Ausführung gemäß Figur 10 hat einen ähnlichen Aufbau wie die vorangehend beschriebene Ausführung. Diese zeichnet sich dadurch aus, dass an dem Käfig 44 zusätzlich zu den Kugeln 43 Gleitelemente 92 befestigt sind. Die Gleitelemente 92 bilden erfindungsgemäße Reibelemente, die an einem durch den Käfig 44 gebildeten Zwischenelement angebracht sind. Die Gleitelemente 92 haben im Querschnitt ebenfalls Übermaß zu den tragenden Kugeln 43, so dass sie im Reibkontakt an den Kugellaufbahnen 411 und/oder 421 anliegen. Im Unterschied zu den genannten Reibwälzelementen 91 wälzen sie sich allerdings nicht ab, sondern gleiten reibend bzw. schleifend. Die dabei auftretende Grenzflächenreibung bewirkt eine Reibungskraft in Umfangsrichtung, die sich als Gegenmoment zwischen Innenring 41 und Außenring 42 äußert.

Die Gleitelemente 92 können ringsegmentförmig ausgebildet sein und sind in Umfangsrichtung bevorzugt jeweils zwischen Kugeln 43 angeordnet.

Bevorzugt bestehen die Gleitelemente 92 aus einem weicheren Material als Innenring 41, Außenring 42 und Kugeln 43, beispielsweise einem Kunststoff. Dessen Eigenschaften bezüglich der Oberflächenreibung und Elastizität können vorgegeben werden, um in dem Lager 4 ein bestimmtes Gegenmoment zu erzeugen. Durch die Elastizität können die Gleitelemente 92 unter elastischer Vorspannung eingespannt sein, so dass sie mit definierter Andruckkraft in Normalenrichtung gegen die Kugellaufbahnen 411 und/oder 421 zur Erzeugung einer definierten Reibungskraft angedrückt werden.

Eine alternative Ausführung ist in Figuren 6 und 7 gezeigt. Im Unterschied zu den vorangehend beschriebenen Ausführungen weist dieses Lager kein Wälzkörper auf, sondern einen ringförmigen Gleitring 93, der schwimmend, in Umfangsrichtung beweglich zwischen Innenring 41 und Außenring 42 angeordnet ist. Dieser kann aus einem definiert gleitfähigen Material bestehen ähnlich wie die beschriebenen Gleitelemente 92, beispielsweise aus einem Kunststoff.

Der Gleitring 93 wird anstelle des Käfigs 44 zwischen Innenring 41 und Außenring 42 angeordnet, so dass anstelle der genannten Kugellaufbahnen 411 und 421 Gleitbahnen 412 und 422 realisiert sind. Der Gleitring 93 bildet einen erfindungsgemäßes Zwischenelement, welches selbst den Reibkörper bildet und im Reibkontakt gleitend den Innenring 41 und den Außenring 42 kontaktiert.

Durch die Wahl des Materials und der Abmessungen sowie der Vorspannkraft, mit der der reibkontakt belastet wird, kann das als Gegenmoment wirksame Reibmoment in weiten Grenzen auf den angestrebten Wert eingestellt werden.

### Bezugszeichenliste

- 1: Kraftfahrzeuglenkung
- 102: Lenkrad
- 103: Lenkgetriebe
- 104: Lenkritzel
- 112, 114, 116: Hilfskraftunterstützung
- 2: Lenkwelle
- 21: Befestigungsabschnitt
- 3: Lenksäule
- 4: Lager
- 41: Innenring
- 410: Nut
- 411: Kugellaufbahn
- 412: Gleitbahn
- 42: Außenring
- 421: Kugellaufbahn
- 422: Gleitbahn
- 43: Kugeln
- 44: Käfig
- 45: Klemmring
- 451: Krallen
- 5: Mantelrohr
- 51: Sicherungsring
- 52: Schulter
- 6: Manteleinheit
- 7: Konsoleneinheit
- 71: Seitenwangen
- 72: Schwenkachse
- 8: Spanneinrichtung
- 81: Betätigungshebel
- 82: Spannachse
- 83: Spanngetriebe
- 90: O-Ring (Reibelement)
- 91: Reibwälzelement
- 92: Gleitelemente (Reibelemente)
- 93: Gleitring

## Patentansprüche

1. Lenksäule (3) für ein Kraftfahrzeug, mit einer Lenkwelle (2), die in einem Mantelrohr (5) um ihre Längsachse (L) drehbar in einem Lager (4) gelagert ist, welches zumindest einen mit der Lenkwelle (2) drehfest verbundenen Innenring (41) und einen koaxial dazu drehfest an dem Mantelrohr (5) angebrachten Außenring (42) umfasst, und mindestens ein Reibelement (90, 91, 92, 93), das in einem Reibkontakt zwischen Innenring (41) und Außenring (42) angeordnet ist,
**dadurch gekennzeichnet,**
**dass** das Lager (4) mindestens ein in Umfangsrichtung schwimmend zwischen dem Innenring (41) und dem Außenring (42) gelagertes Zwischenelement (44, 92, 93) aufweist, an dem das Reibelement (92, 93) flächig angebracht ist.

2. Lenksäule nach Anspruch 1, **dadurch gekennzeichnet, dass** das Reibelement (92, 93) den Innenring (41) und/oder den Außenring (42) und/oder ein Zwischenelement (44, 90, 91, 92, 93) kontaktiert.

3. Lenksäule nach einem der vorangehenden Ansprüche, **dadurch gekennzeichnet, dass** das Reibelement (92, 93) koaxial zur Längsachse (L) zwischen Innenring (41) und Außenring (42) angeordnet ist und bevorzugt ringförmig oder ringsegmentförmig ausgebildet ist.

4. Lenksäule nach einem der vorangehenden Ansprüche, **dadurch gekennzeichnet, dass** das Lager (4) als Wälzlager ausgebildet ist mit zwischen dem Innenring (41) und dem Außenring (42) angeordneten Wälzkörpern (43, 91).

5. Lenksäule nach Anspruch 4, **dadurch gekennzeichnet, dass** die Wälzkörper (43) in einem Käfig (44) drehbar aufgenommen sind.

6. Lenksäule nach Anspruch 5, **dadurch gekennzeichnet, dass** an dem Käfig (44) mindestens ein Reibelement (92) angebracht ist, welches mindestens eine Gleitfläche aufweist.

7. Lenksäule nach einem der Ansprüche 4 bis 6, **dadurch gekennzeichnet, dass** ein Reibelement (90) im Bereich einer Wälzkörperlaufbahn (411) in dem Innenring (41) und/oder dem Außenring (42) angeordnet ist und in den Wälzkörper-Umlaufquerschnitt vorsteht.

8. Lenksäule nach einem der vorangehenden Ansprüche, **dadurch gekennzeichnet, dass** ein Reibelement (92, 93) zumindest teilweise aus einem elastischem Material besteht, welches weicher ist als das Material von Innenring (41), Außenring (42) oder Wälzkörpern (43).

## Claims

1. Steering column (3) for a motor vehicle, with a steering shaft (2) which is mounted in a casing tube (5) in a bearing (4) such that it can be rotated about its longitudinal axis (L), which bearing (4) comprises at least one inner ring (41) which is connected fixedly to the steering shaft (2) so as to rotate with it, and one outer ring (42) which is attached coaxially with respect thereto and fixedly to the casing tube (5) so as to rotate with it, and at least one friction element (90, 91, 92, 93) which is arranged in a frictional contact between the inner ring (41) and the outer ring (42), **characterized in that** the bearing (4) has at least one intermediate element (44, 92, 93) which is mounted in a floating manner in the circumferential direction between the inner ring (41) and the outer ring (42), and to which the friction element (92, 93) is attached over the surface area.

2. Steering column according to Claim 1, **characterized in that** the friction element (92, 93) makes contact with the inner ring (41) and/or the outer ring (42) and/or an intermediate element (44, 90, 91, 92, 93).

3. Steering column according to either of the preceding claims, **characterized in that** the friction element (92, 93) is arranged coaxially with respect to the longitudinal axis (L) between the inner ring (41) and the outer ring (42), and is preferably of annular or ring segment-shaped configuration.

4. Steering column according to one of the preceding claims, **characterized in that** the bearing (4) is configured as an anti-friction bearing with the rolling bodies (43, 91) which are arranged between the inner ring (41) and the outer ring (42).

5. Steering column according to Claim 4, **characterized in that** the rolling bodies (43) are received rotatably in a cage (44).

6. Steering column according to Claim 5, **characterized in that** at least one friction element (92) which has at least one sliding face is attached to the cage (44).

7. Steering column according to one of Claims 4 to 6, **characterized in that** a friction element (90) is arranged in the region of a rolling body raceway (411) in the inner ring (41) and/or the outer ring (42), and projects into the rolling body circulation cross section.

8. Steering column according to one of the preceding claims, **characterized in that** a friction element (92, 93) consists at least partially of an elastic material which is softer than the material of the inner ring (41), the outer ring (42) or the rolling bodies (43).

## Revendications

1. Colonne de direction (3) destinée à un véhicule automobile et comprenant un arbre de direction (2) qui est monté dans un tube d'enveloppe (5) de manière à pouvoir tourner sur son axe longitudinal (L) dans un palier (4) qui comprend au moins une bague intérieure (41), reliée solidairement en rotation à l'arbre de direction (2), et une bague extérieure (42) fixée coaxialement à la bague intérieure et solidairement en rotation au tube d'enveloppe (5), et au moins un élément de friction (90, 91, 92, 93) qui est disposé en contact de friction entre la bague intérieure (41) et la bague extérieure (42),
**caractérisée en ce que**
le palier (4) comporte au moins un élément intermédiaire (44, 92, 93) qui est logé de manière flottante dans la direction circonférentielle entre la bague intérieure (41) et la bague extérieure (42) et sur lequel l'élément de friction (92, 93) est fixé de manière sensiblement bidimensionnelle.

2. Colonne de direction selon la revendication 1, **caractérisée en ce que** l'élément de friction (92, 93) vient en contact avec la bague intérieure (41) et/ou la bague extérieure (42) et/ou un élément intermédiaire (44, 90, 91, 92, 93).

3. Colonne de direction selon l'une des revendications précédentes, **caractérisée en ce que** l'élément de friction (92, 93) est disposé coaxialement à l'axe longitudinal (L) entre la bague intérieure (41) et la bague extérieure (42) et a de préférence une forme d'anneau ou une forme de segment d'anneau.

4. Colonne de direction selon l'une des revendications précédentes, **caractérisée en ce que** le palier (4) est réalisé sous la forme d'un palier de roulement comprenant des éléments roulants (43, 91) disposés entre la bague intérieure (41) et la bague extérieure (42).

5. Colonne de direction selon la revendication 4, **caractérisée en ce que** les éléments roulants (43) sont reçus de manière rotative dans une cage (44).

6. Colonne de direction selon la revendication 5, **caractérisée en ce qu'**au moins un élément de friction (92) est fixé à la cage (44) et comporte au moins une surface de glissement.

7. Colonne de direction selon l'une des revendications 4 à 6, **caractérisée en ce qu'**un élément de friction (90) est disposé au niveau d'un chemin de roulement d'élément roulant (411) dans la bague intérieure (41) et/ou dans la bague extérieure (42) et fait saillie dans la section transversale circonférentielle de l'élément roulant.

8. Colonne de direction selon l'une des revendications précédentes, **caractérisée en ce qu'**un élément de friction (92, 93) est au moins partiellement en une matière élastique qui est plus souple que la matière de la bague intérieure (41), de la bague extérieure (42) ou des éléments roulants (43).
